(19) Europäisches Patentamt
European Patent Office
Office européen des brevets

(11) **EP 3 803 694 B1**

(12) **EUROPEAN PATENT SPECIFICATION**

(45) Date of publication and mention
of the grant of the patent:
**28.06.2023  Bulletin 2023/26**

(21) Application number: **19704621.2**

(22) Date of filing: **13.02.2019**

(51) International Patent Classification (IPC):
**G06F 18/24** *(2023.01)*       **G06F 18/21** *(2023.01)*
**G06V 10/82** *(2022.01)*       **H04W 24/08** *(2009.01)*

(52) Cooperative Patent Classification (CPC):
**H04W 24/08; G06F 18/217; G06F 18/24;
G06V 10/82**

(86) International application number:
**PCT/EP2019/053543**

(87) International publication number:
**WO 2019/233635 (12.12.2019 Gazette 2019/50)**

(54) **METHODS, APPARATUS AND COMPUTER-READABLE MEDIUMS RELATING TO DETECTION OF CELL CONDITIONS IN A WIRELESS CELLULAR NETWORK**

VERFAHREN, VORRICHTUNG UND COMPUTERLESBARE MEDIEN ZUM NACHWEIS VON ZELLENZUSTÄNDEN IN EINEM DRAHTLOSEN ZELLULAREN NETZWERK

PROCÉDÉS, APPAREIL ET SUPPORTS LISIBLES PAR ORDINATEUR SE RAPPORTANT À LA DÉTECTION DE CONDITIONS CELLULAIRES DANS UN RÉSEAU CELLULAIRE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2018  EP 18382407**

(43) Date of publication of application:
**14.04.2021  Bulletin 2021/15**

(73) Proprietor: **TELEFONAKTIEBOLAGET LM ERICSSON (PUBL)
164 83 Stockholm (SE)**

(72) Inventors:
• **ENG, Chin Lam
  TOKYO, 152-0032 (JP)**
• **FRANK, Philipp
  Paracuellos de Jarama,
  MADRID 28860 (ES)**

(74) Representative: **Ericsson
Patent Development
Torshamnsgatan 21-23
164 80 Stockholm (SE)**

(56) References cited:
US-A1- 2017 034 721

• **ZORZI MICHELE ET AL: "Cognition-Based Networks: A New Perspective on Network Optimization Using Learning and Distributed Intelligence", IEEE ACCESS, vol. 3, 9 September 2015 (2015-09-09), pages 1512-1530, XP011669443, DOI: 10.1109/ACCESS.2015.2471178 [retrieved on 2015-09-14]**
• **YANG KAI ET AL: "Deep Network Analyzer (DNA): A Big Data Analytics Platform for Cellular Networks", IEEE INTERNET OF THINGS JOURNAL, IEEE, USA, vol. 4, no. 6, 1 December 2017 (2017-12-01), pages 2019-2027, XP011674205, DOI: 10.1109/JIOT.2016.2624761 [retrieved on 2017-12-08]**
• **PARWEZ MD SALIK ET AL: "Big Data Analytics for User-Activity Analysis and User-Anomaly Detection in Mobile Wireless Network", IEEE TRANSACTIONS ON INDUSTRIAL INFORMATICS, IEEE SERVICE CENTER, NEW YORK, NY, US, vol. 13, no. 4, 1 August 2017 (2017-08-01) , pages 2058-2065, XP011658193, ISSN: 1551-3203, DOI: 10.1109/TII.2017.2650206 [retrieved on 2017-08-03]**

- PETER SZILAGYI ET AL: "An Automatic Detection and Diagnosis Framework for Mobile Communication Systems", IEEE TRANSACTIONS ON NETWORK AND SERVICE MANAGEMENT, vol. 9, no. 2, 1 June 2012 (2012-06-01), pages 184-197, XP055249170, US ISSN: 1932-4537, DOI: 10.1109/TNSM.2012.031912.110155 cited in the application

**Description**

Technical field

Embodiments of the present disclosure relate to the detection of cell conditions in a wireless cellular network, and particularly relate to methods, apparatus and computer-readable mediums for the detection of cell conditions in a wireless cellular network, and the training of a classifier model to detect cell conditions in a wireless cellular network.

Background

Mobile broadband traffic in modern wireless cellular networks is highly dynamic, and can vary in the range of minutes up to months. An accurate and on-time cell capacity provisioning is therefore important in order to avoid adverse impacts on network performance and to increase operational efficiency. For example, a shortage of cell capacity may cause poor end-user experience in terms of long webpage download times or video stream freezing. On the other hand, an over-provisioning of cell capacity results in under-utilized cell resources, and therefore operational inefficiencies. In this regard, it is advantageous to detect and identify cell traffic load issues with high precision and provide the capacity required to satisfy the end-user demand in a timely manner.

Currently, a number of different techniques are used to analyze cell traffic load for various radio access network (RAN) technologies. These techniques typically apply a set of rule-based instructions combined with predetermined thresholds for different performance measurement metrics. See, for example, a paper by Peter Szilagyi and Szabolcs Novaczki ("An Automatic Detection and Diagnosis Framework for Mobile Communication Systems", IEEE Transactions on Network and Service Management, vol 9, issue 2, pp 184-197). These rules and thresholds are based on human observations and small sampled data set. Furthermore, the number of performance metrics considered to identify cell load issues is typically small and consists only of common metrics.

Similarly, the document A. Nauman et al. - "Neural networks in wireless networks: Techniques, applications and guidelines", Journal of Network and Computer Applications, Academic Press, NY, vol. 68, pp. 1-27, published on 07-04-2016, XP029539502 teaches various methods of modelling cell conditions in mobile communication networks.

A method to detect cell conditions more accurately is therefore required.

Summary

Embodiments of the disclosure seek to address these and other problems.

In one aspect, there is provided a method of training a classifier model according to the steps of claim 1.

In another aspect, there is provided a method of detecting cell conditions in a wireless cellular network according to the steps of claim 2.

Apparatus, such as network nodes and computing devices, for performing these methods is also provided.

In one aspect, there is provided a computing device for training a classifier model to detect cell conditions in a wireless cellular network as recited in claim 3.

In another aspect, there is provided a computing device for detecting cell conditions in a wireless cellular network as recited in claim 12.

Computer-readable mediums for performing the methods described, but not covered by the claimed subject-matter are also provided.

Brief description of the drawings

For a better understanding of the present disclosure, and to show how it may be put into effect, reference will now be made, by way of example, to the accompanying drawings, in which:

Figure 1 is a schematic diagram of a system according to embodiments of the disclosure;
Figure 2 is a flowchart of a method according to embodiments of the disclosure;
Figure 3 is a flowchart of a method of pre-processing data according to embodiments of the disclosure;
Figure 4 shows an image data set for a cell according to embodiments of the disclosure;
Figure 5 is a flowchart of a method of data annotation according to embodiments of the disclosure;
Figure 6 is a schematic diagram of an autoencoder according to embodiments of the disclosure;
Figure 7 is a flowchart of a method of data augmentation according to embodiments of the disclosure;
Figure 8 is a flowchart of a method of detection cell conditions in a wireless cellular network according to embodiments of the disclosure;
Figure 9 is a schematic diagram of a network node according to embodiments of the disclosure;

Figure 10 is a schematic diagram of a network node according to further embodiments of the disclosure; and
Figure 11 is a schematic diagram of a network node according to yet further embodiments of the disclosure.

Detailed description

The following sets forth specific details, such as particular embodiments.

In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers that are specially adapted to carry out the processing disclosed herein, based on the execution of such programs. Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing modules or one or more controllers, and the terms computer, processor, processing module and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

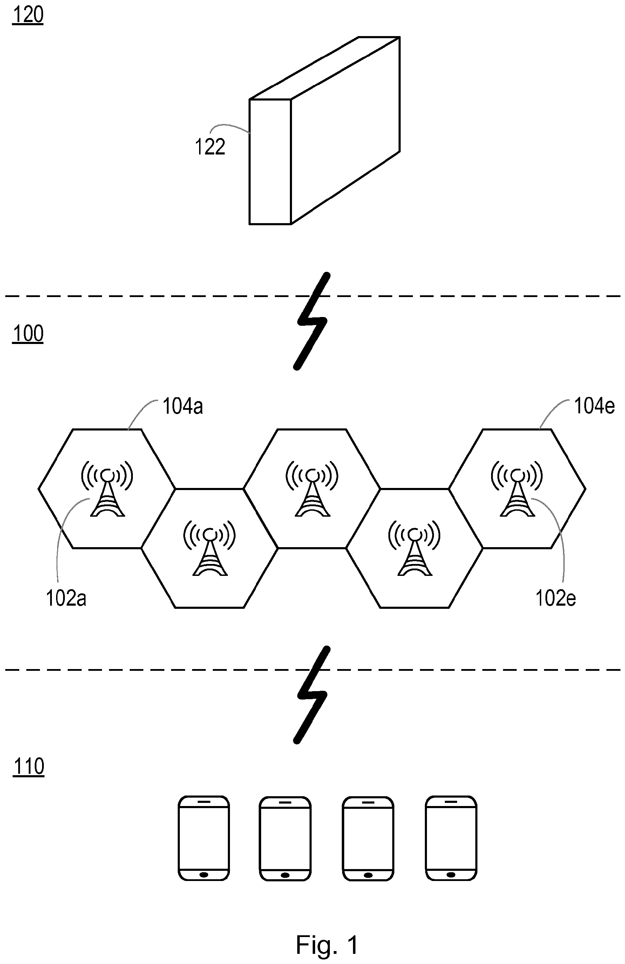

**Figure 1** shows a wireless communication system according to embodiments of the disclosure. In the illustrated embodiment, the system is arranged into three parts: a radio access network 100; wireless terminal devices (or UEs) 110; and a core network server 120, or a server connected to such a core network.

The radio access network 100 comprises a plurality of radio access network nodes 102, each serving one or more cells 104. In the illustrated embodiment, each radio access network node 102 serves a single cell 104; however, those skilled in the art will appreciate that a radio access network node 102 may be configured to serve more than one cell.

As used herein, a radio access network node corresponds to any type of network node which communicates with a UE. Examples of radio access network nodes are NodeB, MeNB, SeNB, a network node belonging to MCG or SCG, base station (BS), multistandard radio (MSR) radio node such as MSR BS, eNodeB, gNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), etc. Moreover, where the following description refers to steps taken in or by a network node or a radio access node, this also includes the possibility that some or all of the processing and/or decision making steps may be performed in a device that is physically separate from the radio antenna of the node, but is logically connected thereto. Thus, where processing and/or decision making is carried out "in the cloud", the relevant processing device is considered to be part of the node for these purposes.

The core network 120 comprises or is coupled to a server 122, which is therefore communicatively coupled to the radio access network 100. According to embodiments of the disclosure, the server 122 is configured to receive data from the radio access network 100, and to perform one or more methods for detecting cell conditions based on the received data.

Embodiments of the disclosure further relate to the use of a classifier model for detecting cell conditions based on the received data. Such a classifier model may be trained using one or more machine-learning algorithms, as detailed further herein, and then deployed in order to detect cell conditions.

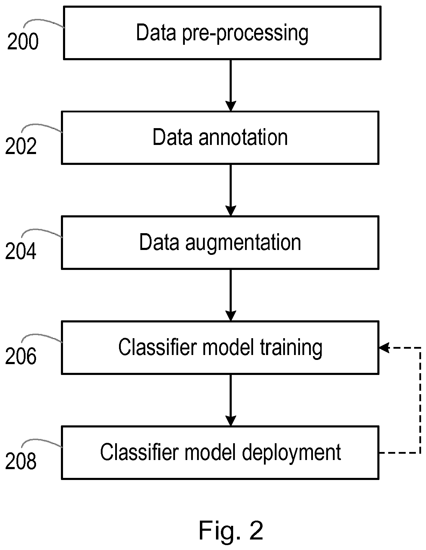

**Figure 2** is a flowchart of a method according to embodiments of the disclosure. The flowchart embodies methods of training a classifier model to detect cell conditions in a wireless cellular network (such as the radio access network 100 described above), and using a classifier model to detect cell conditions in a wireless cellular network (such as the radio access network 100 described above). Those skilled in the art will appreciate that the methods for training and using the classifier model may be performed separately: by separate entities and/or at different times. Thus the disclosure provides separate methods of training a classifier model to detect cell conditions in a wireless cellular network, and using a classifier model to detect cell conditions in a wireless cellular network.

The method may be performed in a network node or server which is in, or coupled to, the core network 120 of the system (such as the network node 122).

The method begins in step 200, in which data is obtained and pre-processed. The data comprises time-series data for a plurality of performance metrics for each cell of a plurality of cells of the network 100. Data may be obtained for each and every cell of the network 100, or a subset of the cells of the network. Thus, a plurality of performance metrics are monitored per cell, over a period of time, and the time-series data for each performance metric is pre-processed.

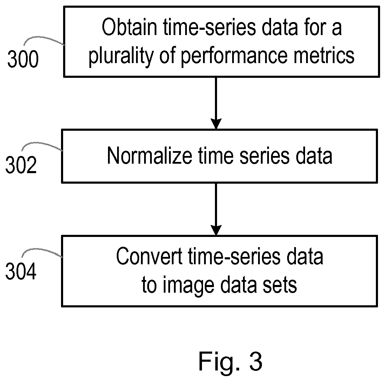

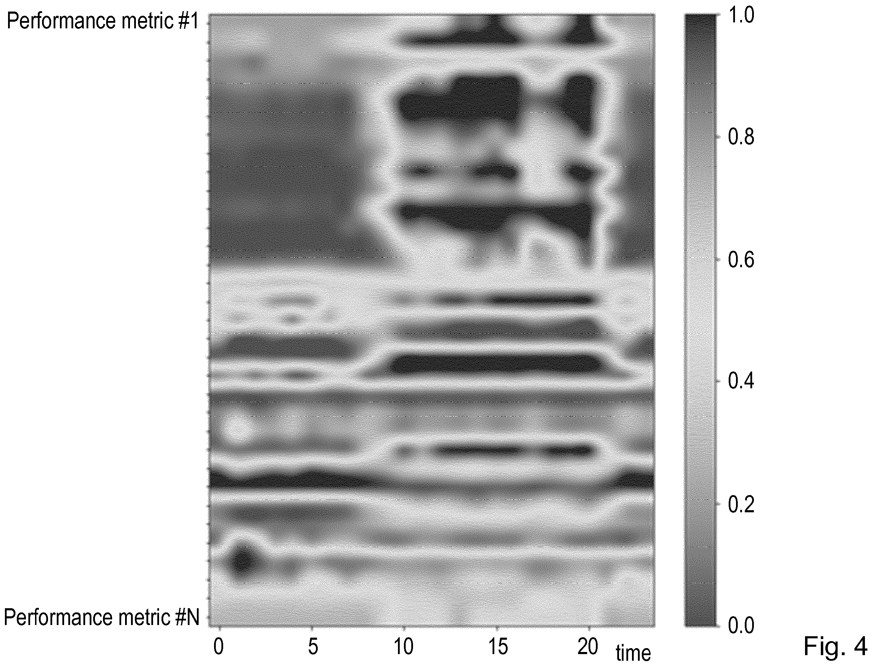

The data is pre-processed in a manner described in more detail below with respect to Figures 3 and 4. According to embodiments of the disclosure, the time-series data is converted to image data, such that one or more image data sets are generated per cell. Where more than one image data set are generated per cell, the image data sets may relate to data acquired in different time windows.

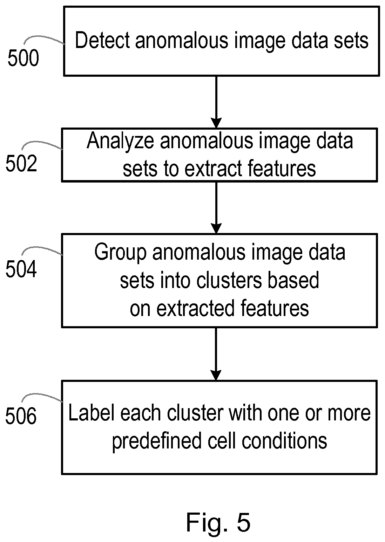

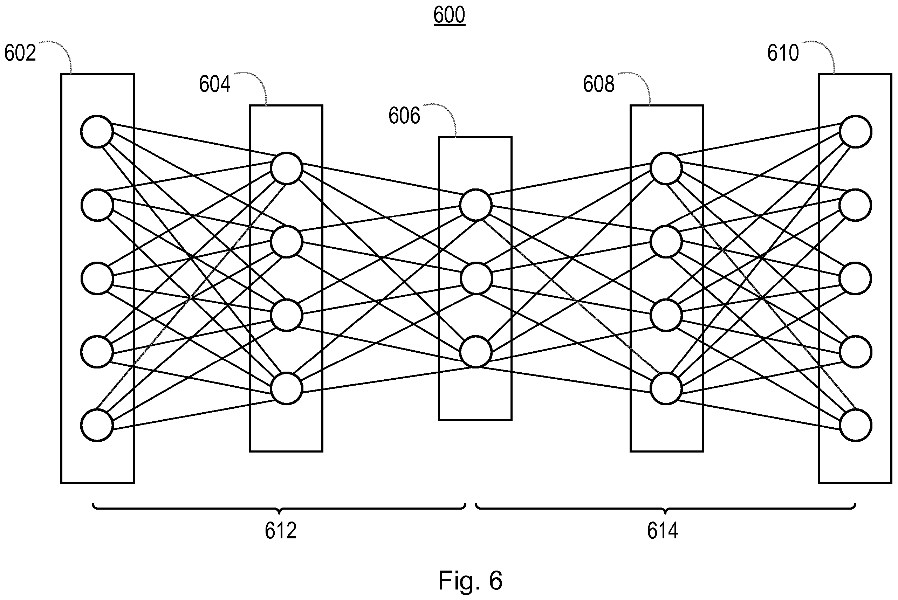

In step 202, the pre-processed data (e.g., the image data sets) is annotated with one or more of a plurality of pre-defined cell conditions. Step 202 may comprise one or more steps of human interaction to identify one or more cells condition presented by a particular image data set such that the particular image data set can be annotated with those one or more cell conditions. However, step 202 may also comprise one or more steps to significantly ameliorate the task of identifying the cell conditions for all image data sets manually. This aspect is described in greater below with respect to Figures 5 and 6.

The pre-defined cell conditions may relate to any type of cell condition, such as faulty (and conversely non-faulty) cell operation; conditions which relate to a load experienced by the cell; conditions which relate to performance of the cell. Some specific examples of pre-defined cell conditions include: Cell Load; - Cell Load & Interference; High downlink (DL) and uplink (UL) Utilization; High DL Utilization; High UL Utilization; High Processor Load; Poor physical uplink control channel (PUCCH) Performance; random access channel (RACH) Accessibility; and Signalling Load.

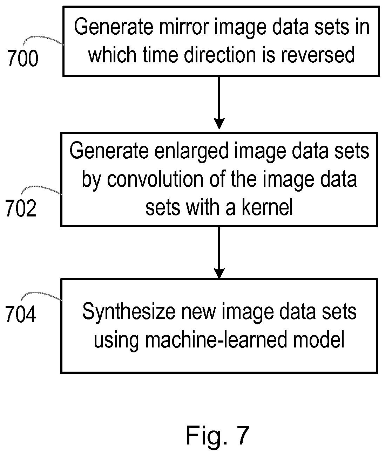

In step 204, the pre-processed, annotated data is augmented. In this optional step, additional data is obtained based on the pre-processed annotated data, so as to increase the size of training data set on which the classifier model is trained. Further detail on this aspect is provided below with respect to Figure 7.

In step 206, the classifier model is trained, based on the pre-processed, annotated (and optionally augmented) data set and using a machine-learning algorithm, to identify each of the plurality of predefined cell conditions. For example, the classifier model may be trained initially on a first fraction of the training data (e.g., 50%). Once the classifier model is able to classify the image data sets in the first fraction, it may be applied to a second fraction of the training data (e.g. a further 25%). The performance of the classifier model on the second fraction may be tested and parameters of the model changed based on the measured performance. Finally, the classifier model is applied to a third fraction (e.g., the remaining 25%), on which the performance is expected to be satisfactory. If this is not the case, the training may be repeated.

In one embodiment, the machine learning algorithm comprises a deep neural network. Convolutional neural networks (e.g. based on a plurality of convolutional layers) may be particularly suited to the task of classifying images.

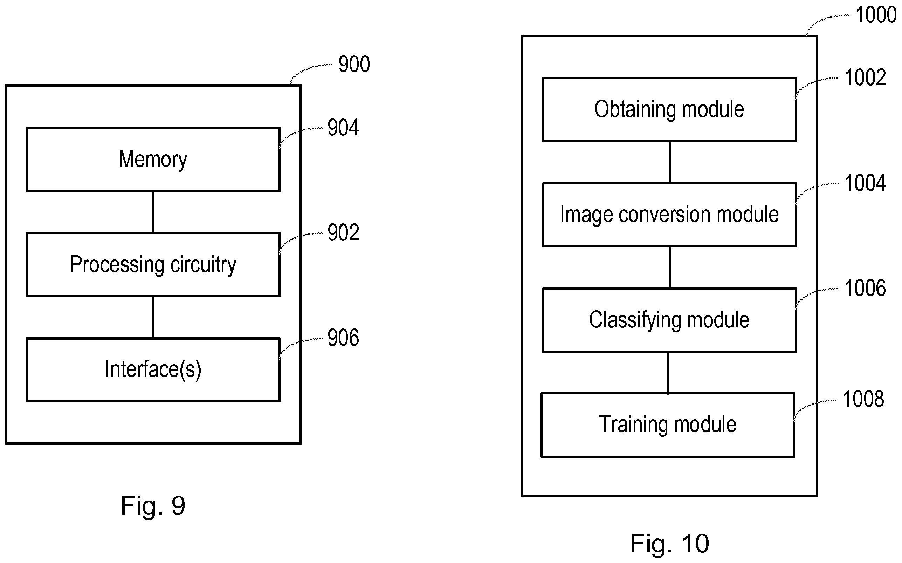

In step 208, the classifier model is deployed in order to detect cell conditions in a wireless cellular network (such as the radio access network 100). Optionally, the additional data acquired while deployed may be utilized as feedback data to train the classifier model further, such that the classifier model can change over time to account for changing network conditions. Further detail regarding this aspect is provided below with respect to Figure 9.

Thus **Figure 3** is a flowchart of a method for pre-processing data. For example, the method may be deployed in step 200 described above.

In step 300, the network node obtains time-series data for a plurality of performance metrics per cell. During this step the raw input data is collected from various data sources, such as the radio-access network 100 (e.g., the nodes 102), one or more management nodes associated with the radio access network 100 and/or the core network 120, etc. The data may be obtained for all or a subset of cells in the network. For example, the data may be obtained for cells in a particular geographical area, or cells belonging to a particular network operator.

The data may be in the format of time-series data and relate to a particular time window, i.e., a sequence of data values acquired at different instances of time over the time window. The time window may be in the order of second, minutes, or hours long. In one embodiment, the time window is 24 hours long. It will further be noted that multiple sets of data may be obtained for the same cell in different time windows (e.g., different days, etc).

The performance metrics monitored for each cell may relate to the load experienced by the cell, the interference experienced by the cell, the radio conditions experienced by terminal devices served by the cell, etc. In this regard, it will be noted that the proposed method is not limited to the relatively few well-known performance metrics of conventional methods, but may include a relatively large number of performance metrics, including otherwise unconventional performance metrics. For example, the performance metrics may include one or more of:

- Active number of downlink and uplink users per Time Transmission Interval (TTI)
- Downlink and uplink scheduling entities per TTI
- Radio resource control (RRC) connection attempts

- Average and maximum number RRC connected users
- Downlink and uplink data volume for Data Radio Bearer (DRB) traffic
- Downlink and uplink data volume for Signaling Radio Bearer (SRB) traffic
- Downlink and uplink Physical Resource Block (PRB) utilization
- Physical Downlink Control Channel (PDCCH) Control Channel Element (CCE) load
- Average Channel Quality Indicator (CQI)
- Rate of CQI below a threshold (e.g. below 6)
- Downlink and Uplink user throughput
- Downlink and Uplink cell throughput
- Radio Access Channel (RACH) attempts
- Random access success ratio
- Downlink and uplink Hybrid ARQ (HARQ) discontinuous transmission ratio
- Average Physical Uplink Shared Channel (PUSCH) Signal-to-Noise-Ratio (SINR)
- Average Physical Uplink Control Channel (PUCCH) SINR
- PUSCH SINR below -2dB rate
- PUCCH SINR below 0dB rate
- PUSCH interference level
- PUCCH interference level
- Average pathloss
- Pathloss below 130dB rate
- UE power limitation rate
- Average processor load
- 90th percentile of processor load

After the data is obtained in step 300, the raw data may be subject to one or more data cleansing techniques. For example, the data may be cleansed by ensuring that missing data, erroneous data, outliers and inconsistent data, etc., have been handled in a consistent way.

After the data has been prepared in this way, it may be assumed that for each base station cell **j** a specific performance measurement metric **i** observed over a time sequence in the range of **{0...K}** can be represented by $d_{ij}$. This performance metric vector can be written as

$$ \boldsymbol{d_{i,j}} = \begin{bmatrix} d_{i,0,j} & d_{i,1,j} & \cdots & d_{i,K-1,j} & d_{i,K,j} \end{bmatrix} $$

The granularity of the time sequence can be flexibly defined from minutes to hours, days, up to weeks depending on the desired time window observation for the cell traffic load patterns.

In step 302, the time-series data is normalized to ensure that data is consistent between different cells, which may utilize different radio access technologies, different hardware, different measurement techniques, etc. During normalization the performance metric values are encoded to fall within a range defined by a universal minimum value and a universal maximum value, for example, in the range between 0 and 1. In this way, the performance metric values after this transformation correspond to intensities instead of absolute values.

In one embodiment, the normalization of the values comprises a determination of a maximum value for each performance metric. If the measured value for a performance metric at a particular time instance is equal to or greater than the maximum value for that performance metric, the measure value is encoded to be equal to 1. If the measured value for the performance metric is less than the maximum value, the measured value is encoded to a value between 0 and 1.

For example, each element of the corresponding performance metric vectors $d_{ij}$ may be encoded as follows

$$ \alpha_{i,k,j} = \begin{cases} \dfrac{1}{e_i} d_{i,k,j} & , \forall \; \dfrac{1}{e_i} d_{i,k,j} \leq 1 \\ 1 & , \forall \; \dfrac{1}{e_i} d_{i,k,j} > 1 \end{cases}, \qquad k = 0 \ldots K $$

where $e_i$ is an encoding value (i.e. the maximum value referred to above), and where $\alpha_{i,k,j}$ is the encoded value for the *i*th performance metric at time *k* for cell *j*. As a result, all values above 1 (corresponding to outliers) are capped to 1.

The encoding value $e_i$ may be determined for each performance metric in various ways. In one embodiment, the encoding value is selected based on statistical analysis of the performance metric to determine an appropriate maximum value. Note that the determined maximum value may not be the highest value of the performance metric, but may take into account statistical outliers.

For example, a statistical outlier may be deemed as any value for a performance metric which meets the following condition:

Sample value > 75th-percentile of sample distribution + 1.5 * IRQ,

where IRQ is the interquartile range (dispersion) defined as 75th-percentile - 25th-percentile. The maximum value may be determined as the highest sample value which is not an outlier.

Alternatively, a skilled person may be employed to suggest a maximum value for a performance metric based on his or her experience and domain knowledge.

In a further alternative embodiment, these two methods may be combined such that a maximum value for a performance metric may be determined from one or other of the two methods. For example, the lower of the two suggested maximum values (i.e., that proposed by the statistical analysis and that proposed by the skilled person) may be selected as the encoding value.

The proposed encoding approach has significant advantages as it enables:

- Generic feature learning independent of absolute performance metrics values, i.e. generic cell traffic load issue features learned are applicable to different operator networks even though their performance metric statistics can differ significantly.

- Flexibility and applicability of the classification model to numerous different networks using different equipment by adapting the encoding values.

- Network data of different operators can be encoded in a different way based on user requirements, allowing more stringent or less stringent cell condition detection depending on the applied encoding values.

In step 304, according to embodiments of the disclosure, the normalized data is converted to image data. Thus, for each cell and each time window, an image dataset is formulated based on the normalized performance metrics.

The conversion to image data may be achieved by transforming the encoded dataset into a 3D array representation. In this regard, all encoded performance metric vectors

$$\boldsymbol{\alpha_{i,j}} = \begin{bmatrix} \alpha_{i,0,j} & \alpha_{i,1,j} & \cdots & \alpha_{i,K-1,j} & \alpha_{i,K,j} \end{bmatrix}$$

for each cell $\boldsymbol{j}$ may be structured into a large (sparse) matrix $\boldsymbol{X_j}$ as follows:

$$\boldsymbol{X_j} = \begin{bmatrix} \alpha_{1,j} \\ \alpha_{2,j} \\ \vdots \\ \alpha_{L-1,j} \\ \alpha_{L,j} \end{bmatrix}$$

Here $\boldsymbol{L}$ corresponds to the number of performance metrics captured for each cell. The matrix $\boldsymbol{Xj}$ represents the pixel intensity of the feature image for cell j and has the dimension $\boldsymbol{L \times K}$:

$$\boldsymbol{X_j} = \begin{bmatrix} \alpha_{1,1,j} & \alpha_{1,2,j} & \cdots & \alpha_{1,K,j} \\ \alpha_{2,1,j} & \alpha_{2,2,j} & \cdots & \alpha_{2,K,j} \\ \vdots & \vdots & \ddots & \vdots \\ \alpha_{L,1,j} & \alpha_{L,2,j} & \cdots & \alpha_{L,K,j} \end{bmatrix}$$

Thus, the compact feature representation $\boldsymbol{F}$ of all cells can be defined as

$$F = \begin{bmatrix} X_1 \\ X_2 \\ \vdots \\ X_{B-1} \\ X_B \end{bmatrix}$$

The discussion above has assumed that each cell comprises a single dataset. In fact, as noted previously, multiple datasets may be formed for each cell at different time windows. Thus, in one embodiment, there are **B** cells and this corresponds to the number of datasets. In another embodiment, the dimension **B** refers to the number of datasets, which may relate to data from **B** or fewer cells.

The data may be arranged in a variety of different ways, and the present disclosure is not limited in that respect. In one embodiment, the image data set may be arranged as shown in **Figure 4.**

In this embodiment, the different performance metrics are arranged on the Y axis, time is shown on the X axis, and the pixel value at ($x,y$) corresponds to the encoded value for the yth performance metric at time x. When visualized as in Figure 4, the pixel value may correspond to a colour or shade. Of course, the image data need not actually be displayed in this manner. It will be understood by the skilled person that the performance metrics should be arranged consistently (e.g., in the same order) for each image data set, and that the size of the time window should be the same for all image data sets.

This image representation allows additional information to be extracted about the time and space relationships of various performance metrics. These relationships form complex patterns which often cannot be detected by conventional classification systems or the human eye. Based on the proposed image representation, key representative features of these patterns can be learned.

Transforming the classification problem into an image pattern recognition problem enables the usage of very powerful Convolutional Neural Networks (CNNs) to create a classifier model for detecting a large variety of cell conditions. This has important advantages because CNNs can significantly reduce complexity as well as overfitting compared to commonly used Multi-Layer Perceptron (MLP) networks. For example, in a MLP network each value (here pixel) of an image is treated as an independent input. As a result, if the first hidden layer of the MLP network has h neurons then the number of weights in the first weight matrix would be h * image width * image height. Having a large number of weights not only leads to increased training time but also makes the model prone to overfitting due to the large number of parameters.

Furthermore, applying CNNs allows all relevant features to be efficiently detected and enables more generic feature learning compared to MLP networks, producing a set of feature maps at each convolutional layer. These generic learned features can be used for all positions on the image. This has the advantage that cell conditions can be detected independent of their time of occurrence (day or night-time, busy hour, etc.).

The output of the data pre-processing step 200, and the method of Figure 3, is therefore a plurality of image data sets for each cell (and potentially multiple time windows). In step 202, these image data sets are annotated according to one of a plurality of predefined cell conditions.

The pre-defined cell conditions may relate to any type of cell condition, such as faulty (and conversely non-faulty) cell operation; conditions which relate to a load experienced by the cell; conditions which relate to performance of the cell. Some specific examples of pre-defined cell conditions include: Cell Load; - Cell Load & Interference; High downlink (DL) and uplink (UL) Utilization; High DL Utilization; High UL Utilization; High Processor Load; Normal; Poor physical uplink control channel (PUCCH) Performance; random access channel (RACH) Accessibility; and Signalling Load.

**Figure 5** is a flow chart of a method for annotating the image data sets according to embodiments of the disclosure. The method may be utilized in step 202 described above, for example.

Creating and training a classifier model to detect cell conditions may rely on a dataset that is labeled/annotated. That is, the classifier model is trained using image data sets which have already been classified into one or more of the predefined cell conditions. However, data annotation requires a human expert to provide high-quality labeling. This process can be very costly and the effort and time required to annotate a large dataset is prohibitive. The method described below with respect to Figure 5 utilizes one or more unsupervised machine-learning algorithms to reduce significantly the complexity and cost of dataset annotation.

The method begins in step 500, in which the image data sets are analyzed to detect anomalous image data sets, e.g., those image data sets with cell conditions which are not "normal".

It will be understood here that, assuming the data is obtained from the network without bias, the majority of the dataset will represent normal cell operation. Most of the image data sets (e.g. over 90%) will correspond to the "normal" cell condition. Any image data sets which differ from the majority therefore represent abnormal, or anomalous, cell conditions which can be classified into one or more of the predefined cell conditions other than "normal".

In one embodiment, an autoencoder is used to identify the anomalous image data sets.

**Figure 6** is a schematic diagram of an autoencoder 600 according to embodiments of the disclosure. The autoencoder 600 may implement a neural network, such as an MLP or feed-forward artificial neural network.

The autoencoder 600 consists of multiple layers of neurons (602, 604, 606, 608, 610) in a directed graph, where each layer is fully connected to the next one (each neuron in one layer is connected to each of the neurons in adjacent layers). In the illustrated embodiment the autoencoder 600 comprises five layers; those skilled in the art will appreciate that any number of layers may be provided.

An input layer 602 has the greatest number of neurons, with successive layers having fewer neurons until a bottleneck layer 606 is reached. The bottleneck layer 606 has the fewest neurons. After the bottleneck layer 606, successive layers have greater numbers of neurons until an output layer 610 is reached.

An autoencoder is made of two components. The first component is the encoder 612 which brings the data from a high dimensional input to a bottleneck layer 606, in which the number of neurons is the smallest. As a result, the high number of variables from the original input data in layer 602 is compressed, creating a model that captures only the essential features of the input data.

The second component is the decoder 614, which takes this encoded input and converts it back to the original input shape (here an image). Both the original input (original image) in layer 602 and the reproduced input (output image) in layer 610 are then compared, and the difference between the pair is indicative of the severity of the anomaly (e.g., the extent to which the original image data set deviates from the majority of the dataset). For example, the difference may be measured by the mean square error (MSE) of all the individual variables or performance metric values. An image data set may then be identified as anomalous if the difference exceeds a threshold value, for example.

The trained autoencoder model is fed with a large amount of input data (image data sets) and detects cells which have all kinds of abnormal cell behavior. These abnormal image data sets are then output from step 500.

The filtered abnormal dataset is usually still very big and labeling this dataset would therefore still require a tremendous effort in time and expertise.

In order to further facilitate the dataset annotation, in step 502 the anomalous image data sets are analyzed to extract the most relevant features for categorizing the anomalous image data sets into different categories.

According to an embodiment of the disclosure, a second autoencoder may be used to perform this analysis. Thus, the output of the first autoencoder in step 500 may be used as an input for a second autoencoder. The objective is to automatically categorize the detected abnormal cells into clusters with similar abnormal performance metric patterns so that the actual annotation process is simplified. In this regard, the second autoencoder is used to extract the most relevant features of the abnormal dataset. These features can be obtained from the bottleneck layer 606 of the trained autoencoder, often also referred to as compressed latent space representation. It will be understood by those skilled in the art that the second autoencoder may be schematically represented by the diagram shown in Figure 6, although the values of the neurons will differ between the first and second autoencoders.

The latent space of the abnormal dataset can be used to distinguish the different abnormal cell performance metric patterns. Thus, in step 504, the anomalous image data sets are grouped into clusters based on the features extracted in step 502.

To do so, a dimensionality-reduction technique (e.g., T-distribution Stochastic Nearest Embedding (t-SNE)) may be used to reduce the dimensionality of the extracted latent space to a 3D space. The resulting 3-D latent space representation can then be clustered, for example, by a k-means clustering algorithm.

In step 506, the different clusters are then sampled and inspected by a domain knowledge expert, who can annotate the dataset with the appropriate description and label (e.g., one of the predefined cell conditions). As the image data sets in each cluster exhibit similar patterns, relatively few of the image data sets need actually be inspected by the expert in order to classify entire clusters. One or more predefined cell conditions applied by the expert to one or more of the image data sets in each cluster can be applied automatically to other image data sets in each cluster. Further, due to the image representation of the performance metrics, the pattern understanding for humans is simplified, because analyzing the time-trend representation of each individual performance metric to identify a pattern is much more complex for humans. Hence, the proposed method reduces the complexity and time effort required to annotate the data set.

In step 204, the annotated image data sets are optionally augmented with additional data. In this way, a training data set (which comprises the annotated image data sets and the additional data) can be increased in size, increasing the accuracy with which the classifier model classifies otherwise rare cell conditions.

The transformation of performance metric data into image data sets facilitates the application of several data augmentation techniques to further improve the performance (precision and recall) of the cell condition classifier model. By using data augmentation, the number of labeled data samples is increased without the need of any further human labeling effort. This is important for cell conditions with fewer samples to obtain a more balanced training dataset. The actual distribution of cell conditions is usually not balanced which often leads to challenges for the model to learn and generalize well. Data augmentation techniques can also be used to improve feature learning which helps the model to generalize better, i.e. to improve the prediction accuracy for unseen data.

**Figure 7** is a flowchart of a method of data augmentation, which may be utilized in step 204 described above. The method sets out three data augmentation techniques which may be used in combination (as in the illustrated embodiment, in each of steps 700, 702 and 704) or separately.

In step 700, mirror image datasets are generated for the annotated image data sets output from step 202 or 506, in which the time direction (e.g., the x axis) is reversed. This does not alter the features of the pattern, but varies the pattern occurrence on the time axis. The resulting pattern variations improve feature learning and help to balance the dataset.

In step 702, images are enlarged to improve generic feature learning and therefore enhance generalization of the classifier model. For example, the image data sets may be enlarged by convolution with a kernel. A kernel is a small matrix (i.e. smaller than the image data set itself). Convolutional neural networks convolve a kernel with the input data, i.e. take patches from the input image data set of a size equal to the kernel, and convolve between the values in the patch and those of the kernel matrix. The smaller the kernel, the more information is preserved. By enlarging the image data set from a relatively low resolution to a relatively high resolution and using, for example, a kernel size of 3x3, more information about the pattern shapes can be preserved and learned by the classifier model.

Note that all of the image data sets (e.g., the original annotated image data sets and/or the mirror image data sets output from step 700) may be subject to enlargement, or only a subset of the image data sets.

In step 704, new image data sets may be synthesized using a machine-learned model. This step may address the issue of dataset imbalance, in which some cell conditions have more data samples than others.

The new image data sets may be synthesized based on the annotated image data sets (e.g., the original image data sets, the mirror image data sets and/or the enlarged image data sets). In this regard, a Generative Adversarial Network (GAN) may be utilized to synthesize additional data samples for minority categories.

GANs can learn to mimic any density distribution of data. In the present context, GANs can be taught to create synthetic image data sets exhibiting particular cell conditions which are indistinguishable from the "real" image data sets. cell load traffic issue images like the actual ones.

A GAN consists of two components. One neural network, called the generator, generates new data instances based on a training data set (e.g., the existing image data sets for a particular cell condition), while the other neural network, the discriminator, evaluates them for authenticity; i.e. the discriminator decides whether each instance of data it reviews belongs to the actual training dataset or not. The generator therefore creates new image data sets that it passes to the discriminator, along with the original image data sets. The goal of the generator is to generate synthetic image data sets which the discriminator is unable to distinguish from the real, authentic image data sets. The goal of the discriminator is to identify images coming from the generator as fake. The correctness of the discriminator's determination is fed back to the discriminator to improve its ability to detect synthetic image data sets, and to the generator to improve its ability to generate synthetic image data sets. After many iterations, the generator is able to learn the distribution of the original input data and can synthesize additional annotated image data sets that can be used to improve the performance of the classifier model.

The GAN may therefore be trained separately based on image data sets exhibiting each cell condition (or particularly those cell conditions for which there are relatively few samples), and used to create additional image data sets exhibiting the same cell conditions.

In step 204, the data set (e.g., the plurality of annotated image data sets, plus potentially additional data from step 202) is used to train a classifier model to detect one of a plurality of predefined cell conditions. Further detail regarding this aspect is described above.

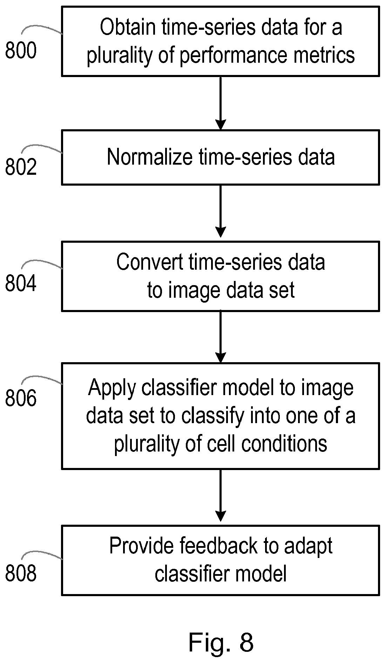

Once trained, the classifier model may be deployed and used to detect cell conditions in any cell of a wireless cellular network. **Figure 8** is a flowchart of a method for deploying and using the classifier model trained as described above. The method may be used in step 206, for example.

In step 800, the network node obtains time-series data for a plurality of performance metrics for a cell in the network (e.g., one of the cells 104). This aspect is substantially similar to step 300 described above, but for just one cell (i.e., the cell to be classified) rather than a plurality of cells. Thus the time-series data may be cleansed and, in step 802, normalized. Step 802 may be substantially similar to step 302 described above. The normalized time-series data is then converted, in step 804, to an image data set. Step 804 may be substantially similar to step 304 described above.

In step 806, the trained classifier model is applied to the image data set to classify the cell into one of the plurality of predefined cell conditions.

The classification in step 806 may be subject to human supervision. Thus, particularly if the classifier model detects a rare or unusual cell condition, a skilled person may review the classification for its accuracy. This review may generate feedback (whether positive, to indicate that the classification was correct, or negative to indicate that the classification was incorrect) with which the classifier model can be re-trained. In step 808, optionally, this feedback is provided to the machine-learning algorithm in step 206 to adapt the classifier model so that it is better able to classify similar image data sets in future.

**Figure 9** is a schematic diagram of a network node 900 according to embodiments of the disclosure. The network node 900 may be operable to perform the methods according to any one of the methods described above, such as the methods described with respect to Figures 2, 3, 5, 7 and 8. The network node 900 may be any suitable computing or processing device coupled to or part of a wireless cellular network. For example, the network node 900 may be embodied in the server or network node 122 described above with respect to Figure 1.

The network node 900 comprises processing circuitry 902 (e.g., one or more processors), a non-transitory machine-readable medium 904 and, optionally, one or more interfaces 906. In the illustrated embodiment, these components are connected together in a linear fashion, with the processing circuitry 902 coupled directly to the medium 904 and the interfaces 906. In other embodiments, the components may be coupled to each other indirectly, and/or in a non-linear fashion, such as via one or more system buses. The interfaces 906 may comprise hardware and/or software for transmitting and/or receiving data signals from other nodes or equipment. For example, the interfaces 906 may comprise one or more of: an optical transmitter and an optical receiver for transmitting and receiving optical signals; a wireless transmitter and a wireless receiver (or a wireless transceiver) for transmitting and receiving wireless signals; and an electronic interface for transmitting and receiving electronic signals.

In one embodiment, the non-transitory machine-readable medium 904 stores instructions which, when executed by the processing circuitry 902, causes the processing circuitry to: obtain time-series data for a plurality of performance metrics for each cell of a plurality of cells of the wireless cellular network; convert the time-series data to respective image data sets for each cell of the plurality of cells; classify the image data sets into one of a plurality of predefined cell conditions; and apply a machine-learning algorithm to training data comprising the classified image data sets to generate a classifier model for classifying image data sets into one of the plurality of predefined cell conditions.

In another embodiment, the non-transitory machine-readable medium 904 stores instructions which, when executed by the processing circuitry 902, causes the processing circuitry to: obtain time-series data for a plurality of performance metrics for a cell of the wireless cellular network; convert the time-series data to an image data set; and apply a machine-learned classifier model to the image data set, to classify the image data set into one of a plurality of predefined cell conditions.

**Figure 10** is a schematic diagram of a network node 1000 according to further embodiments of the disclosure. The network node 1000 may be operable to perform the methods according to any one of the methods described above, such as the methods described with respect to Figures 2, 3, 5 and 7. The network node 1000 may be any suitable computing or processing device coupled to or part of a wireless cellular network. For example, the network node 1000 may be embodied in the server or network node 122 described above with respect to Figure 1.

The network node 1000 comprises an obtaining module 1002, an image conversion module 1004, a classifying module 1006 and a training module 1008. In one embodiment, the obtaining module 1002 is configured to obtain time-series data for a plurality of performance metrics for each cell of a plurality of cells of the wireless cellular network. The image conversion module 1004 is configured to convert the time-series data to respective image data sets for each cell of the plurality of cells. The classification module 1006 is configured to classify or annotate the image data sets into one of a plurality of predefined cell conditions. The training module 1008 is configured to apply a machine-learning algorithm to training data comprising the classified or annotated image data sets to generate a classifier model for classifying image data sets into one of the plurality of predefined cell conditions.

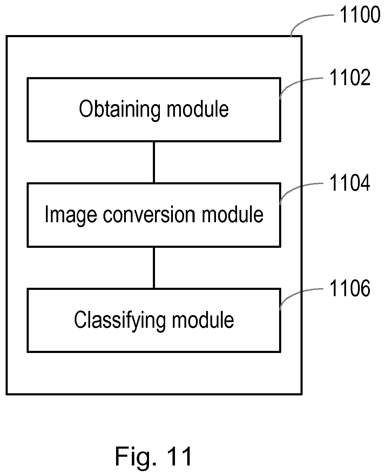

**Figure 11** is a schematic diagram of a network node 1100 according to yet further embodiments of the disclosure. The network node 1100 may be operable to perform the methods according to any one of the methods described above, such as the methods described with respect to Figures 2 and 8. The network node 1100 may be any suitable computing or processing device coupled to or part of a wireless cellular network. For example, the network node 1100 may be embodied in the server or network node 122 described above with respect to Figure 1.

The network node 1100 comprises an obtaining module 1102, an image conversion module 1104 and a classifying module 1106. In one embodiment, the obtaining module 1102 is configured to obtain time-series data for a plurality of performance metrics for a cell of the wireless cellular network. The image conversion module 1104 is configured to convert the time-series data to an image data set. The classification module 1106 is configured to apply a machine-learned classifier model to the image data set, to classify the image data set into one of a plurality of predefined cell conditions.

In one embodiment, the modules described above with respect to Figures 10 and 11 are implemented purely in software. In another embodiment the modules described above with respect to Figures 10 and 11 are implemented purely in hardware. In a further embodiment the modules described above with respect to Figures 10 and 11 are implemented in a combination of software and hardware.

Embodiments of the disclosure thus provide methods, apparatus and computer-readable medium for training and utilizing a classifier model to detect cell conditions in a wireless cellular network.

By converting performance metrics to image data, the limitations of current techniques are addressed, namely, limited number of variables (performance metrics) over a time window, inability to dynamically adapt to network environment, mandatory prior knowledge of the system's upper and lower bound threshold values. Since the classifier model learns from a high dimensional space (deep image representation) it can generalize well and any combination of variables (performance metrics) within a time window is considered. Hence, a change in traffic load distribution or trend can be easily detected and classified. Without having to learn from a known anomaly history based on operational thresholds, or domain expert designed thresholds, the proposed technique is capable to learn generic features and to create a mathematical model that generalizes the whole dataset and compares reproduced input values against the original input values.

**Claims**

1. A method of training a classifier model to detect cell conditions in a wireless cellular network (100), the method comprising:

   obtaining (300) time-series data for a plurality of performance metrics for each cell of a plurality of cells (104) of the wireless cellular network;
   converting (304) the time-series data to respective image data sets for each cell of the plurality of cells, wherein each image data set comprises a first dimension representative of time and a second dimension representative of the performance metric, and wherein each pixel comprises a value for the performance metric at a particular time instant;
   classifying (202) the image data sets into one of a plurality of predefined cell conditions; and
   applying (206) a machine-learning algorithm to training data comprising the classified image data sets to generate a classifier model for classifying image data sets into one of the plurality of predefined cell conditions.

2. A method of detecting cell conditions in a wireless cellular network (100), the method comprising:

   obtaining (800) time-series data for a plurality of performance metrics for a cell (104) of the wireless cellular network;
   converting (804) the time-series data to an image data set, wherein the image data set comprises a first dimension representative of time and a second dimension representative of the performance metric, and wherein each pixel comprises a value for the performance metric at a particular time instant; and
   applying (806) a machine-learned classifier model to the image data set, to classify the image data set into one of a plurality of predefined cell conditions.

3. A computing device (900) for training a classifier model to detect cell conditions in a wireless cellular network (100), the computing device comprising processing circuitry (902) and a non-transitory machine-readable medium (904) storing instructions which, when executed by the processing circuitry, cause the computing device (900) to:

   obtain (300) time-series data for a plurality of performance metrics for each cell of a plurality of cells of the wireless cellular network;
   convert (304) the time-series data to respective image data sets for each cell of the plurality of cells, wherein each image data set comprises a first dimension representative of time and a second dimension representative of the performance metric, and wherein each pixel comprises a value for the performance metric at a particular time instant;
   classify (202) the image data sets into one of a plurality of predefined cell conditions; and
   apply (206) a machine-learning algorithm to training data comprising the classified image data sets to generate a classifier model for classifying image data sets into one of the plurality of predefined cell conditions.

4. The computing device according to claim 3, wherein the computing device is caused to classify the image data sets into one of the plurality of predefined cell conditions by:

   analysing (500) the image data sets using a first autoencoder to detect anomalous image data sets, wherein the anomalous image data sets are image data sets which are indicative of a cell anomaly;
   analysing (502) the anomalous image data sets, using a second autoencoder, to extract features distinguishing between the anomalous image data sets; and
   grouping (504) the anomalous image data sets into a plurality of clusters, based on the extracted features, wherein each image data set within a cluster is j indicative of one or more particular cell conditions of the plurality of predefined cell conditions.

5. The computing device according to claim 4, wherein the first autoencoder comprises a first plurality of layers of neurons (602, 604, 606, 608, 610), the first plurality of layers comprising a first subset of layers (612) for encoding the image data sets into a plurality of features at a first bottleneck layer (606), and a second subset of layers (614) for decoding the features at the first bottleneck layer (606) to recreate the image data sets, and wherein the computing device is caused to analyse the image data sets using the first autoencoder by:
comparing the image data sets to the recreated image data sets, and identifying anomalous image data sets based on the comparison.

6. The computing device according to any one of claims 4 to 5, wherein the computing device is caused to group the anomalous image data sets into the plurality of clusters by:
reducing a dimensionality of the plurality of extracted features to a three-dimensional space.

7. The computing device according to any one of claims 3 to 6, wherein the time-series data for each cell is partitioned into multiple time windows, and wherein the time-series data is converted into respective image data sets for each cell of the plurality of cells, for each time window.

8. The computing device according to any one of claims 3 to 7, wherein the time-series data for each performance metric is normalized (302) between universal minimum and maximum values.

9. The computing device according to any one of claims 3 to 8, wherein the training data comprises the classified image data sets and one or more synthesized image data sets.

10. The computing device according to claim 9, wherein the one or more synthesized image data sets comprises image data sets to which one or more of the following techniques have been applied:

a time direction of the time-series data is reversed (700);
the image data is enlarged by convolution of the image data sets with a kernel (702); and
synthesis by a machine-learned model trained based on the image data sets (704).

11. The computing device according to any one of claims 3 to 10, wherein the machine-learning algorithm is a neural network.

12. A computing device (900) for detecting cell conditions in a wireless cellular network (100), the computing device comprising processing circuitry (902) and a non-transitory machine-readable medium (904) storing instructions which, when executed by the processing circuitry, cause the computing device to:

obtain (800) time-series data for a plurality of performance metrics for a cell (104) of the wireless cellular network;
convert (804) the time-series data to an image data set, wherein the image data set comprises a first dimension representative of time and a second dimension representative of the performance metric, and wherein each pixel comprises a value for the performance metric at a particular time instant; and
apply (806) a machine-learned classifier model to the image data set, to classify the image data set into one of a plurality of predefined cell conditions.

13. The computing device according to claim 12, wherein time-series data for each cell is partitioned into multiple time windows, and wherein the time-series data is converted into respective image data sets for each time window.

14. The computing device according to any one of claims 12 to 13, wherein the time-series data for each performance metric is normalized between universal minimum and maximum values.

15. The computing device according to any one of claims 12 to 14, wherein the computing device is implemented in a node of the wireless cellular network.

**Patentansprüche**

1. Verfahren zum Trainieren eines Klassifikatormodells, um Zellenzustände in einem drahtlosen zellularen Netzwerk (100) zu detektieren, wobei das Verfahren Folgendes umfasst:

Erlangen (300) von Zeitreihendaten für eine Vielzahl von Leistungsmetriken für jede Zelle einer Vielzahl von Zellen (104) des drahtlosen zellularen Netzwerks;

Umwandeln (304) der Zeitreihendaten in jeweilige Bilddatensätze für jede Zelle der Vielzahl von Zellen, wobei jeder Bilddatensatz eine erste Dimension, die die Zeit darstellt, und eine zweite Dimension, die die Leistungsmetrik darstellt, umfasst, und wobei jedes Pixel einen Wert für die Leistungsmetrik zu einem bestimmten Zeitpunkt umfasst;

Klassifizieren (202) der Bilddatensätze in eine einer Vielzahl von vordefinierten Zellenzuständen; und

Anwenden (206) des Maschinenlernalgorithmus zum Trainieren von Daten, die die klassifizierten Bilddatensätze umfassen, um ein Klassifikatormodell zum Klassifizieren von Bilddatensätzen in einen der Vielzahl von vordefinierten Zellenzuständen zu erzeugen.

2. Verfahren zum Detektieren von Zellenzuständen in einem drahtlosen zellularen Netzwerk (100), wobei das Verfahren Folgendes umfasst:

Erlangen (800) von Zeitreihendaten für eine Vielzahl von Leistungsmetriken für eine Zelle (104) des drahtlosen zellularen Netzwerks;

Umwandeln (804) der Zeitreihendaten in einen Bilddatensatz, wobei der Bilddatensatz eine erste Dimension, die die Zeit darstellt, und eine zweite Dimension, die die Leistungsmetrik darstellt, umfasst, und wobei jedes Pixel einen Wert für die Leistungsmetrik zu einem bestimmten Zeitpunkt umfasst; und

Anwenden (806) eines maschinell erlernten Klassifikatormodells auf den Bilddatensatz, um den Bilddatensatz in einen einer Vielzahl von vordefinierten Zellenzuständen zu klassifizieren.

3. Rechenvorrichtung (900) zum Trainieren eines Klassifikatormodells, um Zellenzustände in einem drahtlosen zellularen Netzwerk (100) zu detektieren, wobei die Rechenvorrichtung eine Verarbeitungsschaltung (902) und ein nicht transitorisches maschinenlesbares Medium (904) umfasst, auf dem Anweisungen gespeichert sind, die durch Ausführung durch die Verarbeitungsschaltung die Rechenvorrichtung (900) zu Folgendem veranlassen:

Erlangen (300) von Zeitreihendaten für eine Vielzahl von Leistungsmetriken für jede Zelle einer Vielzahl von Zellen des drahtlosen zellularen Netzwerks;

Umwandeln (304) der Zeitreihendaten in jeweilige Bilddatensätze für jede Zelle der Vielzahl von Zellen, wobei jeder Bilddatensatz eine erste Dimension, die die Zeit darstellt, und eine zweite Dimension, die die Leistungsmetrik darstellt, umfasst, und wobei jedes Pixel einen Wert für die Leistungsmetrik zu einem bestimmten Zeitpunkt umfasst;

Klassifizieren (202) der Bilddatensätze in eine einer Vielzahl von vordefinierten Zellenzuständen; und

Anwenden (206) eines Maschinenlernalgorithmus auf Trainingsdaten, die die klassifizierten Bilddatensätze umfassen, um ein Klassifikatormodell zum Klassifizieren von Bilddatensätzen in einen von der Vielzahl von vordefinierten Zellenzuständen zu erzeugen.

4. Rechenvorrichtung nach Anspruch 3, wobei die Rechenvorrichtung dazu veranlasst wird, die Bilddatensätze durch Folgendes in einen der Vielzahl von vordefinierten Zellenzuständen zu klassifizieren:

Analysieren (500) der Bilddatensätze unter Verwendung eines ersten Autoencoders, um anomale Bilddatensätze zu detektieren, wobei die anomalen Bilddatensätze sind, die eine Zellanomalie angeben;

Analysieren (502) der anomalen Bilddatensätze unter Verwendung eines zweiten Autoencoders, um Merkmale zu extrahieren, die sich zwischen den anomalen Bilddatensätzen unterscheiden; und

Gruppieren (504) der anomalen Bilddatensätze in eine Vielzahl von Clustern auf Grundlage der extrahierten Merkmale, wobei jeder Bilddatensatz innerhalb eines Clusters j ist, der einen oder mehrere bestimmte Zellenzustände der Vielzahl von vordefinierten Zellenzuständen angibt.

5. Rechenvorrichtung nach Anspruch 4, wobei der erste Autoencoder eine erste Vielzahl von Schichten von Neuronen (602, 604, 606, 608, 610) umfasst, wobei die erste Vielzahl von Schichten einen ersten Teilsatz von Schichten (612) zum Codieren der Bilddatensätze in eine Vielzahl von Merkmalen auf einer ersten Engstellenschicht (606) und einen zweiten Teilsatz von Schichten (614) zum Decodieren der Merkmale auf der ersten Engstellenschicht (606) umfasst, um die Bilddatensätze nachzubilden, und wobei die Rechenvorrichtung dazu veranlasst wird, die Bilddatensätze unter Verwendung des ersten Autoencoders durch Folgendes zu analysieren:

Vergleichen der Bilddatensätze mit den nachgebildeten Bilddatensätzen und Identifizieren von anomalen Bilddatensätzen auf Grundlage des Vergleichs.

6. Rechenvorrichtung nach einem der Ansprüche 4 bis 5, wobei die Rechenvorrichtung dazu veranlasst wird, die anomalen Bilddatensätze durch Folgendes in die Vielzahl von Clustern zu gruppieren:
Reduzieren einer Dimensionalität der Vielzahl von extrahierten Merkmalen in einen dreidimensionalen Raum.

7. Rechenvorrichtung nach einem der Ansprüche 3 bis 6, wobei die Zeitreihendaten für jede Zelle in mehrere Zeitfenster unterteilt werden und wobei die Zeitreihendaten in jeweilige Bilddatensätze für jede Zelle der Vielzahl von Zellen für jedes Zeitfenster umgewandelt werden.

8. Rechenvorrichtung nach einem der Ansprüche 3 bis 7, wobei die Zeitreihendaten für jede Leistungsmetrik zwischen universellen minimalen und maximalen Werten normalisiert (302) werden.

9. Rechenvorrichtung nach einem der Ansprüche 3 bis 8, wobei die Trainingsdaten die klassifizierten Bilddatensätze und einen oder mehrere synthetisierte Bilddatensätze umfassen.

10. Rechenvorrichtung nach Anspruch 9, wobei der eine oder die mehreren synthetisierten Bilddatensätze Bilddatensätze umfassen, auf die eine oder mehrere der folgenden Techniken angewendet wurden:

eine Zeitrichtung der Zeitreihendaten wird umgekehrt (700);
die Bilddaten werden durch Faltung der Bilddatensätze mit einem Kern vergrößert (702); und
Synthese durch ein Maschinenlernmodell, das auf Grundlage der Bilddatensätze trainiert wird (704).

11. Rechenvorrichtung nach einem der Ansprüche 3 bis 10, wobei der Maschinenlernalgorithmus ein neuronales Netz ist.

12. Rechenvorrichtung (900) zum Detektieren von Zellenzuständen in einem drahtlosen zellularen Netzwerk (100), wobei die Rechenvorrichtung eine Verarbeitungsschaltung (902) und ein nicht transitorisches maschinenlesbares Medium (904) umfasst, auf dem Anweisungen gespeichert sind, die bei Ausführung durch die Verarbeitungsschaltung die Rechenvorrichtung zu Folgendem veranlassen:

Erlangen (800) von Zeitreihendaten für eine Vielzahl von Leistungsmetriken für eine Zelle (104) des drahtlosen zellularen Netzwerks;
Umwandeln (804) der Zeitreihendaten in einen Bilddatensatz, wobei der Bilddatensatz eine erste Dimension, die die Zeit darstellt, und eine zweite Dimension, die die Leistungsmetrik darstellt, umfasst, und wobei jedes Pixel einen Wert für die Leistungsmetrik zu einem bestimmten Zeitpunkt umfasst; und
Anwenden (806) eines maschinell erlernten Klassifikatormodells auf den Bilddatensatz, um den Bilddatensatz in einen von einer Vielzahl von vordefinierten Zellenzuständen zu klassifizieren.

13. Rechenvorrichtung nach Anspruch 12, wobei die Zeitreihendaten für jede Zelle in mehrere Zeitfenster unterteilt werden und wobei die Zeitreihendaten in jeweilige Bilddatensätze für jedes Zeitfenster umgewandelt werden.

14. Rechenvorrichtung nach einem der Ansprüche 12 bis 13, wobei die Zeitreihendaten für jede Leistungsmetrik zwischen universellen minimalen und maximalen Werten normalisiert werden.

15. Rechenvorrichtung nach einem der Ansprüche 12 bis 14, wobei die Rechenvorrichtung in einem Knoten des drahtlosen zellularen Netzwerks umgesetzt ist.

## Revendications

1. Procédé d'apprentissage d'un modèle de classificateur pour détecter des conditions cellulaires dans un réseau cellulaire sans fil (100), le procédé comprenant :

l'obtention (300) de données de série temporelle pour une pluralité de mesures de performances pour chaque cellule d'une pluralité de cellules (104) du réseau cellulaire sans fil ;
la conversion (304) des données de série temporelle en ensembles de données d'image respectifs pour chaque cellule de la pluralité de cellules, dans lequel chaque ensemble de données d'image comprend une première dimension représentant le temps et une seconde dimension représentant la mesure de performance, et dans lequel chaque pixel comprend une valeur pour la mesure de performance à un instant particulier ;
le classement (202) des ensembles de données d'image dans l'une parmi une pluralité de conditions cellulaires prédéfinies ; et

l'application (206) d'un algorithme d'apprentissage automatique à des données d'apprentissage comprenant les ensembles de données d'image classés pour générer un modèle de classificateur pour classer des ensembles de données d'image dans l'une de la pluralité de conditions cellulaire prédéfinies.

2. Procédé de détection de conditions cellulaires dans un réseau cellulaire sans fil (100), le procédé comprenant :

l'obtention (800) de données de série temporelle pour une pluralité de mesures de performances pour une cellule (104) du réseau cellulaire sans fil ;
la conversion (804) des données de série temporelle en un ensemble de données d'image, dans lequel l'ensemble de données d'image comprend une première dimension représentant le temps et une seconde dimension représentant la mesure de performance,
et dans lequel chaque pixel comprend une valeur pour la mesure de performance à un instant particulier ; et
l'application (806) d'un modèle de classificateur appris automatiquement à l'ensemble de données d'image, pour classer l'ensemble de données d'image dans l'une parmi une pluralité de conditions cellulaires prédéfinies.

3. Dispositif informatique (900) pour former un modèle de classificateur pour détecter des conditions cellulaires dans un réseau cellulaire sans fil (100), le dispositif informatique comprenant des circuits de traitement (902) et un support lisible par machine non transitoire (904) stockant des instructions qui, lorsqu'elles sont exécutées par le circuit de traitement, amènent le dispositif informatique (900) à :

obtenir (300) des données de série temporelle pour une pluralité de mesures de performances pour chaque cellule d'une pluralité de cellules du réseau cellulaire sans fil ;
convertir (304) les données de série temporelle en ensembles de données d'image respectifs pour chaque cellule de la pluralité de cellules, dans lequel chaque ensemble de données d'image comprend une première dimension représentant le temps et une seconde dimension représentant la mesure de performance, et dans lequel chaque pixel comprend une valeur pour la mesure de performance à un instant particulier ;
classer (202) les ensembles de données d'image dans l'une parmi une pluralité de conditions cellulaires prédéfinies ; et
appliquer (206) un algorithme d'apprentissage automatique à des données d'apprentissage comprenant les ensembles de données d'image classés pour générer un modèle de classificateur pour classer des ensembles de données d'image dans l'une de la pluralité de conditions cellulaire prédéfinies.

4. Dispositif informatique selon la revendication 3, dans lequel le dispositif informatique est amené à classer les ensembles de données d'image dans l'une de la pluralité de conditions cellulaires prédéfinies en :

analysant (500) les ensembles de données d'image à l'aide d'un premier auto-encodeur pour détecter des ensembles de données d'image anormaux, dans lequel les ensembles de données d'image anormaux sont des ensembles de données d'image qui indiquent une anomalie de cellule ;
analysant (502) les ensembles de données d'image anormaux, à l'aide d'un second auto-encodeur, pour extraire des caractéristiques distinguant les ensembles de données d'image anormaux ; et
regroupant (504) les ensembles de données d'image anormaux en une pluralité de grappes, sur la base des caractéristiques extraites, dans lequel chaque ensemble de données d'image à l'intérieur d'une grappe indique une ou plusieurs conditions cellulaires particulières de la pluralité de conditions cellulaires prédéfinies.

5. Dispositif informatique selon la revendication 4, dans lequel le premier auto-encodeur comprend une première pluralité de couches de neurones (602, 604, 606, 608, 610), la première pluralité de couches comprenant un premier sous-ensemble de couches (612) pour coder l'ensemble de données d'image en une pluralité de caractéristiques au niveau d'une première couche de goulot d'étranglement (606), et un second sous-ensemble de couches (614) pour décoder les caractéristiques au niveau de la première couche de goulot d'étranglement (606) pour recréer les ensembles de données d'image, et dans lequel le dispositif informatique est amené à analyser les ensembles de données d'image à l'aide du premier auto-encodeur en :
comparant les ensembles de données d'image aux ensembles de données d'image recréés, et en identifiant les ensembles de données d'image anormaux sur la base de la comparaison.

6. Dispositif informatique selon l'une quelconque des revendications 4 et 5, dans lequel le dispositif informatique est amené à regrouper les ensembles de données d'image anormaux dans la pluralité de grappes en :
réduisant une dimensionnalité de la pluralité de caractéristiques extraites à un espace tridimensionnel.

**7.** Dispositif informatique selon l'une quelconque des revendications 3 à 6, dans lequel les données de série temporelle pour chaque cellule sont partitionnées en plusieurs fenêtres temporelles, et dans lequel les données de série temporelle sont converties en ensembles de données d'image respectifs pour chaque cellule de la pluralité de cellules, pour chaque fenêtre temporelle.

**8.** Dispositif informatique selon l'une quelconque des revendications 3 à 7, dans lequel les données de série temporelle pour chaque mesure de performance sont normalisées (302) entre des valeurs minimales et maximales universelles.

**9.** Dispositif informatique selon l'une quelconque des revendications 3 à 8, dans lequel les données d'apprentissage comprennent les ensembles de données d'image classés et un ou plusieurs ensembles de données d'image synthétisés.

**10.** Dispositif informatique selon la revendication 9, dans lequel les un ou plusieurs ensembles de données d'image synthétisés comprennent des ensembles de données d'image auxquels une ou plusieurs des techniques suivantes ont été appliquées :

une direction temporelle des données de série temporelle est inversée (700) ;
les données d'image sont agrandies par convolution des ensembles de données d'image avec un noyau (702) ; et
synthèse par un modèle appris automatiquement formé sur la base des ensembles de données d'image (704).

**11.** Dispositif informatique selon l'une quelconque des revendications 3 à 10, dans lequel l'algorithme d'apprentissage automatique est un réseau neuronal.

**12.** Dispositif informatique (900) pour détecter des conditions cellulaires dans un réseau cellulaire sans fil (100), le dispositif informatique comprenant des circuits de traitement (902) et un support lisible par machine non transitoire (904) stockant des instructions qui, lorsqu'elles sont exécutées par le circuit de traitement, amènent le dispositif informatique à :

obtenir (800) des données de série temporelle pour une pluralité de mesures de performances pour une cellule (104) du réseau cellulaire sans fil ;
convertir (804) les données de série temporelle en un ensemble de données d'image, dans lequel l'ensemble de données d'image comprend une première dimension représentant le temps et une seconde dimension représentant la mesure de performance, et dans lequel chaque pixel comprend une valeur pour la mesure de performance à un instant particulier ; et
appliquer (806) un modèle de classificateur appris automatiquement à l'ensemble de données d'image, pour classer l'ensemble de données d'image dans l'une parmi une pluralité de conditions cellulaires prédéfinies.

**13.** Dispositif informatique selon la revendication 12, dans lequel les données de série temporelle pour chaque cellule sont partitionnées en plusieurs fenêtres temporelles, et dans lequel les données de série temporelle sont converties en ensembles de données d'image respectifs pour chaque fenêtre temporelle.

**14.** Dispositif informatique selon l'une quelconque des revendications 12 et 13, dans lequel les données de série temporelle pour chaque mesure de performance sont normalisées entre des valeurs minimales et maximales universelles.

**15.** Dispositif informatique selon l'une quelconque des revendications 12 à 14, dans lequel le dispositif informatique est mis en œuvre dans un noeud du réseau cellulaire sans fil.

Fig. 1

```
200 ──╮  ┌─────────────────────────────┐
       │  │     Data pre-processing      │
          └─────────────────────────────┘
                       │
                       ▼
202 ──╮  ┌─────────────────────────────┐
       │  │       Data annotation        │
          └─────────────────────────────┘
                       │
                       ▼
204 ──╮  ┌─────────────────────────────┐
       │  │      Data augmentation       │
          └─────────────────────────────┘
                       │
                       ▼
206 ──╮  ┌─────────────────────────────┐◄──┐
       │  │   Classifier model training  │   │
          └─────────────────────────────┘   │
                       │                     │
                       ▼                     │
208 ──╮  ┌─────────────────────────────┐    │
       │  │ Classifier model deployment  │───┘
          └─────────────────────────────┘
```

Fig. 2

```
┌─────────────────────────────────┐
│   Obtain time-series data for a  │
│  plurality of performance metrics │
└─────────────────────────────────┘
300

              │
              ▼

┌─────────────────────────────────┐
│     Normalize time series data   │
└─────────────────────────────────┘
302

              │
              ▼

┌─────────────────────────────────┐
│      Convert time-series data    │
│        to image data sets        │
└─────────────────────────────────┘
304
```

Fig. 3

Fig. 4

500 — Detect anomalous image data sets

502 — Analyze anomalous image data sets to extract features

504 — Group anomalous image data sets into clusters based on extracted features

506 — Label each cluster with one or more predefined cell conditions

Fig. 5

Fig. 6

```
┌─────────────────────────────────┐
│   Generate mirror image data sets in │
│   which time direction is reversed  │
└─────────────────────────────────┘
```
700

```
┌─────────────────────────────────┐
│  Generate enlarged image data sets  │
│   by convolution of the image data  │
│        sets with a kernel           │
└─────────────────────────────────┘
```
702

```
┌─────────────────────────────────┐
│   Synthesize new image data sets    │
│    using machine-learned model      │
└─────────────────────────────────┘
```
704

Fig. 7

800  Obtain time-series data for a
     plurality of performance metrics

802  Normalize time-series data

804  Convert time-series data
     to image data set

806  Apply classifier model to image
     data set to classify into one of a
     plurality of cell conditions

808  Provide feedback to adapt
     classifier model

Fig. 8

Fig. 9

Fig. 10

EP 3 803 694 B1

1100

1102

Obtaining module

1104

Image conversion module

1106

Classifying module

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER SZILAGYI ; SZABOLCS NOVACZKI.** An Automatic Detection and Diagnosis Framework for Mobile Communication Systems. *IEEE Transactions on Network and Service Management,* vol. 9 (2), 184-197

- Neural networks in wireless networks: Techniques, applications and guidelines. **A. NAUMAN et al.** Journal of Network and Computer Applications. Academic Press, 07 April 2016, vol. 68, 1-27